# EUROPÄISCHE PATENTSCHRIFT

(11) **EP 0 996 515 B1**
(45) Veröffentlichungstag und Bekanntmachung des Hinweises auf die Patenterteilung: **17.12.2003**
(21) Anmeldenummer: 99929070.3
(22) Anmeldetag: 03.05.1999
(51) Int. Cl.: B22D 13/04, F16G 5/16

(54) **VERFAHREN UND VORRICHTUNG ZUR HERSTELLUNG EINES METALLBANDES UND EINE ANWENDUNG DES METALLBANDES**
METHOD AND DEVICE FOR PRODUCING A METAL STRIP AND APPLICATION FOR SAID METAL STRIP
PROCEDE ET DISPOSITIF DE PRODUCTION D'UNE BANDE METALLIQUE ET UTILISATION DE CETTE BANDE METALLIQUE

(30) Priorität: 15.05.1998 DE 19821886
(43) Veröffentlichungstag der Anmeldung: 03.05.2000
(73) Patentinhaber: ROBERT BOSCH GMBH, 70442 Stuttgart (DE)
(72) Erfinder: HOPF, Wilhelm, D-74343 Sachsenheim (DE)
(86) Internationale Anmeldenummer: DE9901285
(87) Internationale Veröffentlichungsnummer: WO99059751

(56) Entgegenhaltungen:
- DE-A- 3 643 347
- GB-A- 378 308
- US-A- 2 513 101
- PATENT ABSTRACTS OF JAPAN vol. 018, no. 283 (M-1613), 30. Mai 1994 (1994-05-30) & JP 06 050391 A (MATSUZAWA SEISAKUSHO:KK), 22. Februar 1994 (1994-02-22)
- PATENT ABSTRACTS OF JAPAN vol. 010, no. 211 (M-501), 24. Juli 1986 (1986-07-24) & JP 61 052443 A (TOYOTA MOTOR CORP), 15. März 1986 (1986-03-15)
- PATENT ABSTRACTS OF JAPAN vol. 010, no. 336 (M-535), 14. November 1986 (1986-11-14) & JP 61 140339 A (FUJI HEAVY IND LTD), 27. Juni 1986 (1986-06-27)

## Beschreibung

### Stand der Technik

Die Erfindung betrifft ein Verfahren und eine Vorrichtung zur Herstellung eines Metallbandes und eine Anwendung des Metallbandes nach dem Oberbegriff des Hauptanspruchs.

Es ist beispielsweise aus der deutschen Offenlegungsschrift DE 36 43 347 A1 ein im Querschnitt in etwa v-förmiger Getrieberiemen bekannt, der einen Stapel von schleifenförmigen Metallbändern enthält. Auf den Metallbändern sind eine Vielzahl von v-förmigen Blöcken bzw. Schubgliedern angeordnet, die in Umfangsrichtung des Metallbandes aufeinanderfolgend auf diesem montiert sind. Um die hohen Belastungen des Metallbandes bei der Kraftübertragung als Schubgliederband, beispielsweise im Antrieb eines Kraftfahrzeugs auszuhalten, ist hier eine aufwendige Fertigungstechnik bei der Herstellung der Vielzahl von Metallbändern und der Befestigung der Blöcke notwendig. Die Metallbänder aus herkömmlichen, nichtamorphen Stahl müssen dabei zumindest zum Teil geschweißt, geschnitten, entgratet, gewalzt und gehärtet werden.

### Vorteile der Erfindung

Ein Verfahren zur Herstellung eines Metallbandes nach der gattungsgemäßen Art wird in vorteilhafter Weise dadurch weitergebildet, dass zunächst eine Schmelze aus einer Metalllegierung, gegebenenfalls mit dem Zusatz von nichtmetallischen Stoffen, hergestellt wird und die Schmelze derart in eine offene, rotierende Trommel gelangt, dass die Schmelze im wesentlichen radial an die Innenseite der Trommel gespritzt wird. Die Schmelze wird nach dem Auftreffen auf die Trommelwand relativ schnell abgekühlt, so dass sich ein nahtloses amorphes Metallband an der Innenwand der Trommel mit einem sehr genau vorgebbaren Umfang herausbildet.

Die zur Herstellung amorpher Metalle benötigten Verfahrensschritte und das.entsprechende Grundmaterial für die Schmelze sind für sich gesehen in ihren Grundlagen bereits in dem vorveröffentlichten Fachbuch: "Einstieg in die modern Werkstoffwissenschaft", Autor: Widhold Brostow, Carl Hanser Verlag München Wien, 1984, Seiten 202 bis 206 beschrieben. Hieraus ist bekannt, dass man Metalle in einer Nichtgleichgewichtsphase herstellen kann, die dann als amorphe Metalle (sog. metallische Gläser) in der Regel ein höhere Festigkeit aufweisen als die in üblicher Weise hergestellten kristallinen Metalle.

Im einzelnen ist aus dem Fachbuch auf Seite 203 noch bekannt, dass kleine geschmolzene Metallkügelchen auf ein wärmeleitendes Substrat geschleudert werden und sich dann nach einer relativ schnellen Abkühlung das amorphe Metall oder eine optimierte Legierung, ev. auch unter Zusatz von nichtmetallischen Stoffen, herausbildet.

Die Erfindungs ist in den Ansprüchen 1, 5 und 7 definiert.

Gemäß der Erfindung wird durch das Aufspritzen der Metallschmelze auf die Innenseite einer rotierenden Trommel in besonders vorteilhafter Weise eine einfache Fertigungsfolge bei der Herstellung eines nahtlosen Bandes erreicht, wobei das Metallband auch für besonders hohe mechanische Belastungen ausgelegt ist.

Bei einer weiteren vorteilhaften Ausführungsform des erfindungsgemäßen Verfahrens weist die innere Oberfläche der Trommel eine vorgegebene Struktur auf, so dass das Metallband nach dem Aufspritzen mit einer hierzu korrespondierenden Oberflächenstruktur ausgebildet wird. Die Trommel kann dann an der Innenseite, an der die Schmelze auftrifft, mittels eines gekühlten Metallzylinders auf einfache Weise schnell abgekühlt werden. Die jeweils gewünschte Struktur oder Kontur befindet sich anschließend der Außenseite des Metallbandes; durch Umstülpen des Metallbandes kann diese Struktur auch auf die Innenseite des Metallbandes gelangen.

Eine besonders vorteilhafte Vorrichtung zur Herstellung eines solchen Metallbandes weist an der Oberfläche der Innenwand der Trommel eine Treppenstruktur auf, womit. eine Anzahl der Metallbänder an den Treppenstufen mit jeweils unterschiedlichem Durchmesser sehr präzise hergestellt werden kann. Zur einfachen Trennung der Metallbänder voneinander nach der Herstellung können an den Treppenstufen Vorsprünge angebracht sein, die die ansonsten einheitliche Fläche des amorphen Materials unterbrechen.

Bei einer bevorzugten Anwendung eines Metallbandes, das mit einem erfindungsgemäßen Verfahren hergestellt ist, ist das nahtlose Metallband Bestandteil eines Schubgliederbandes zur Übertragung von Kräften zwischen zwei rotierenden Bauelementen. Für sich gesehen ist ein solches Schubgliederband aus der, in der Beschreibungseinleitung als Stand der Technik gewürdigten DE 36 43 347 A1 bekannt. Erfindungsgemäß wird mit einem Paket von an ihrem Innen- oder Außendurchmesser jeweils eng aneinanderliegenden Metallbändern auf einfache Weise ein sehr strapazierfähiges Schubgliederband hergestellt.

Bei einem Schubgliederband mit den erfindungsgemäßen Metallbändern lassen sich mit einfachen und flexiblen Fertigungsmethoden weitaus komplexere und präzisere Gestaltungen des gesamten Bandes fertigen, als dies beim Schubgliederband nach dem Stand der Technik der Fall ist; sie weisen außerdem eine höhere Belastbarkeit bei geringerer Bautiefe auf. Bei der Herstellung und Weiterverarbeitung der Metallbänder braucht hierbei weder geschweißt, geschnitten, entgratet, gewalzt und gehärtet werden

Bei einer weiteren Ausführungsform des erfindungsgemäßen Metallbandes besitzen zumindest einige der Metallbänder an ihrem Innen- oder Außendurchmesser, jeweils einem dort anliegenden weiteren Metallband gegenüberliegend, eine unebene, beispielsweise geriffelte, Oberflächenkontur, womit Schmiertaschen gebildet werden können in die gegebenenfalls ein Schmiermittel zwischen den einzelnen Metallbändern ausweichen kann.

Gemäß einer bevorzugten Ausführungsform sind an dem Paket von an ihrem Innen- oder Außendurchmesser jeweils aneinanderliegenden Metallbändern in vorgegebenen Abständen Schubglieder angeordnet, die die zumindest in Teilbereichen v-förmige Kontur des Schubgliederbandes ausbilden und mit der das Schubgliederband in eine entsprechend v-förmige Führungsgeometrie auf den rotierenden Bauelementen eingreift. Auch hier ist mit einer besseren Anpassbarkeit der Kontur des Metallbandes eine einfachere Gestaltung der jeweils erforderlichen Kontur der Schubglieder und des gesamten Schubgliederbandes möglich.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Ein Ausführungsbeispiel der Erfindung wird anhand der Zeichnung erläutert. Es zeigen:
Figur 1 eine Prinzipansicht eines Schubantriebs mit einem Schubgliederband, das ein Metallband enthält;
Figur 2 eine Detailansicht des Schubgliederbandes mit Schubgliedern auf dem Metallband;
Figur 3 eine Trommel zur Herstellung des erfindungsgemäßen nahtlosen, amorphen Metallbandes;
Figur 4 einen Detailschnitt durch das auf der inneren Zylinderwand der Trommel gebildete Metallband;
Figur 5 einen Teilschnitt einer Bauform der inneren Wand der Trommel und
Figur 6 einen vergrößerten Schnitt durch einige der Metallbänder mit einer Riffelung.

### Beschreibung des Ausführungsbeispiels

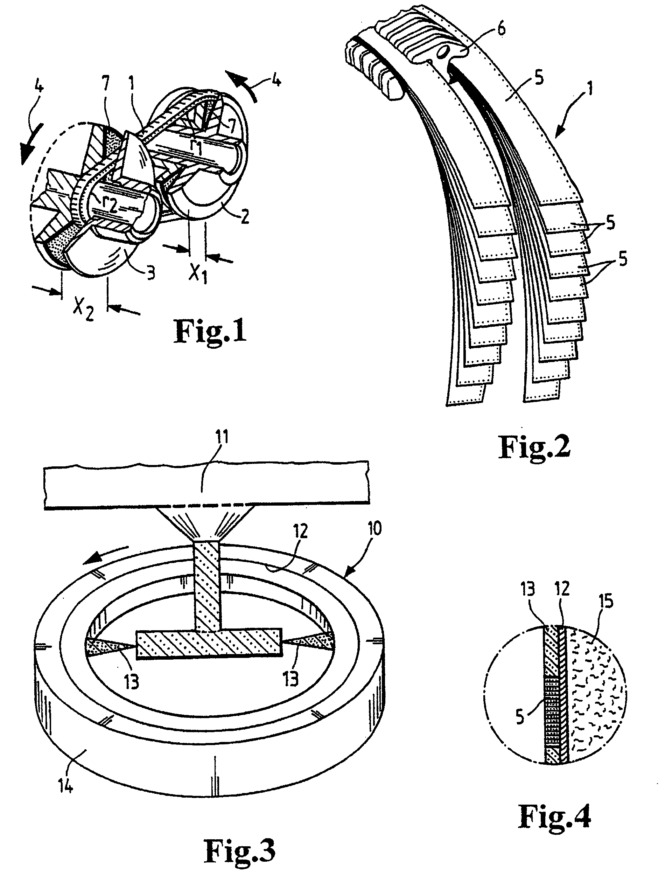

In Figur 1 ist ein Schubgliederband 1 gezeigt, das zwischen einem rotierenden Bauelement 2 und einem weiteren rotierenden Bauelement 3 gespannt ist. Die gesamte Anordnung dreht sich gemäß Pfeil 4 und dient beispielsweise der Kraftübertragung in einem Automatikgetriebe eines Kraftfahrzeuges, wobei die Bauelemente 2 und 3 eine variable Führungsgeometrie 7 für das Schubgliederband 1 durch eine axiale Verschiebung der Seitenteile um den Betrag x₁ bzw. x₂ veränderbare Radien r₁ und r₂ haben.

Aus Figur 2 ist das Schubgliederband 1 im Detail zu erkennen, wobei Metallbänder 5 mit auf dem Umfang aneinandergereihten einzelnen Schubgliedern 6 versehen sind. Mit diesen Schubgliedern 6 kann die Kontur des Schubgliederbandes 1 so gestaltet werden, dass es in die entsprechende, v-förmige Führungsgeometrie 7 an den rotierenden Bauelementen 2 und 3 zur optimalen Kraftübertragung eingreifen kann. Das erfindungsgemäße Schubgliederband 1 wird hier mit einem Paket aus eng aneinandergefügten, in ihren Durchmessern entsprechend abweichenden, nahtlosen Ringen aus den Metallbändern 5 hergestellt.

Eine Trommel 10 zur Herstellung des erfindungsgemäßen amorphen Metallbandes 5 ist in Figur 3 gezeigt. Hier wird über eine Zufuhreinrichtung 11 eine Schmelze 13 aus einer optimierten Metalllegierung an eine zylindrische, innere Wand 12 der schnell rotierenden Trommel 10 gespritzt. Als Metalllegierung kann hier beispielsweise auch eine Nikkellegierung verwendet werden.

Durch eine bestimmte Struktur der Wand 12 an der Stelle, an der die Schmelze auftrifft, kann auch eine gewünschte Kontur an der Außenseite des Metallbandes 5 erzeugt werden. Mit einem kühlbaren Metallzylinder 14 kann die erforderliche schnelle Aushärtung der Schmelze 13 vorgenommen werden, so dass sich die amorphen Eigenschaften des jeweiligen Metallbandes 5 einstellen.

Zur Verdeutlichung der Anordnung nach der Figur 3 ist in Figur 4 ausschnittsweise vergrößert die zum Metallband 5 erstarrende Schmelze gezeigt, die an der Wand 12 in einer entsprechenden Ausnehmung zu liegen kommt. Hinter der Wand 12 befindet sich ein Kühlmedium 15, das in den Metallzylinder 14 eingebracht worden ist.

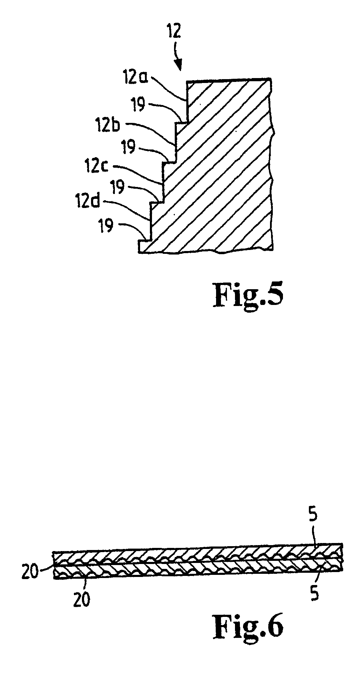

In Figur 5 ist eine Wand 12 mit einer Treppenstruktur gezeigt, bei der an Treppenstufen 12a, 12b, 12c und 12d eine Anzahl von Metallbändern 5 mit unterschiedlichen Durchmessern des sich ergebenden Ringes hergestellt werden. Hier kann somit in einem Herstellungsgang ein vollständiges Paket von Metallbändern 5 produziert werden, die mit ihren entsprechend bemessenen unterschiedlichen Durchmessern zur Bildung des Paketes aneinander gefügt werden können. Durch Vorsprünge 19 können die einzelnen Metallbänder leicht nach dem Erstarren voneinander getrennt werden.

Ein vergrößerte Schnittdarstellung von einigen der aneinanderliegenden Metallbänder 5 zeigt eine Ausführungsform nach Figur 6 mit einer unebenen Oberfläche, hier eine Riffelung 20, die mit dem oben angegebenen Herstellungsverfahren einfach hergestellt werden kann. Diese Riffelung 20 erlaubt die Bildung sogenannter Schmiertaschen zwischen den Metallbändern 5, so dass die Metallbänder 5 immer in weiten Bereichen eng aneinander liegen können.

Ein prinzipielles Herstellungsverfahren eines Metallbandes aus einer Metallschmelze mit einer Legierung von Aluminium zu 75% und Silizium zu 25% ist in dem, in der Beschreibungseinleitung erwähnten Fachbuch: "Einstieg in die modern Werkstoffwissenschaft", Autor: Widhold Brostow, Carl Hanser Verlag München Wien, 1984, auf der Seite 203 Punktl beschrieben. Hieraus ist die Herstellung amorpher Metalle bekannt, die man in einer sog. Nichtgleichgewichtsphase halten kann.

Beim erfindungsgemäßen Ausführungsbeispiel werden die kleinen geschmolzene Metallkügelchen der Schmelze 13 auf die Wand 12 der schnell rotierenden Trommel 10 geschleudert und kühlen sich dann, unterstützt durch das Kühlmedium 15 im Metallzylinder 14, relativ schnell ab.

## Patentansprüche

1. Verfahren zur Herstellung eines Metallbandes, bei dem
- eine Schmelze (13) aus einer Metalllegierung hergestellt wird, wobei
- die Schmelze (13) derart in eine offene, rotierende Trommel (10) gelangt, dass die Schmelze (13) radial an die innere Wand (12) der Trommel (10) gespritzt wird und
- die Schmelze (13) nach dem Auftreffen auf die Wand (12) abgekühlt wird und sich ein nahtloses, amorphes Metallband (5) herausbildet.

2. Verfahren nach Anspruch 1, **dadurch gekennzeichnet, dass**
- die Schmelze (13) zusätzlich zu den metallischen Bestandteilen auch nichtmetallische Bestandteile aufweist.

3. Verfahren nach Anspruch 1 oder 2, **dadurch gekennzeichnet, dass**
- die Trommel (10) an der Innenwand (12) mittels eines gekühlten Metallzylinders (14) abgekühlt wird.

4. Verfahren nach Anspruch 3, **dadurch gekennzeichnet, dass**
- in den Metallzylinder (14) ein Kühlmedium (15) eingefüllt ist.

5. Vorrichtung zur Durchführung des Verfahrens nach einem der vorhergehenden Ansprüche, **dadurch gekennzeichnet, dass**
- die Oberfläche der Innenwand (12) der Trommel (10) eine vorgegebene Struktur aufweist, so dass das Metallband (5) nach dem Aufspritzen mit einer hierzu korrespondierenden Oberflächenstruktur ausgebildet wird, wobei
- die vorgegebene Struktur der Oberfläche der Innenwand (12) der Trommel (10) eine Treppenstruktur aufweist, wodurch eine Anzahl der Metallbänder (5) an den Treppenstufen (12a,12b,12c,12d) mit jeweils unterschiedlichem Durchmesser derart ausbildbar sind, dass sie aufgrund ihrer gemäß der Treppenstufen abweichenden Durchmesser eng aneinanderfügbar sind.

6. Vorrichtung Anspruch 5, **dadurch gekennzeichnet, dass**
- an den Treppenstufen (12a,12b,12c,12d) Vorsprünge (19) zur Trennung der Metallbänder (5) voneinander vorhanden sind.

7. Schubgliederband (1) zur Übertragung von Kräften zwischen zwei rotierenden Bauelementen (2,3) besthend aus ein am Paket von an ihrem Innen- oder Außendurchmesser jeweils aneinanderliegenden Metallbändern (5), wobei die Metallbänder mit einem Verfahren nach einem der Ansprüche 1 bis 4 oder mit einer Vorrichtung nach den Ansprüchen 5 oder 6 hergestellt sind.

8. Schubgliederband nach Anspruch 7, **dadurch gekennzeichnet, dass**
- zumindest einige der Metallbänder (5) an ihrem Innen- oder Außendurchmesser, jeweils einem dort anliegenden weiteren Metallband (5) gegenüberliegend, eine unebene Oberflächenkontur (20) zur Bildung von Schmiertaschen aufweisen.

9. Schubgliederband nach Anspruch 7, **dadurch gekennzeichnet, dass**
- an dem Paket von an ihrem Innen- oder Außendurchmesser jeweils aneinanderliegenden Metallbändern (5) in vorgegebenen Abständen Schubglieder (6) angeordnet sind, die die zumindest in Teilbereichen v-förmige Kontur des Schubgliederbandes (1) ausbilden und mit der das Schubgliederband (1) in eine entsprechend v-förmige Führungsgeometrie (7) auf den rotierenden Bauelementen (2,3) eingreift.

## Claims

1. Process for producing a metal strip, in which
- a melt (13) is produced from a metal alloy,
- the melt (13) passing into an open, rotating drum (10) in such a manner that the melt (13) is sprayed radially onto the inner wall (12) of the drum (10), and
- the melt (13) is cooled after it has hit the wall (12), forming a seamless, amorphous metal strip (5).

2. Process according to Claim 1, **characterized in that**
- the melt (13) in addition to the metallic constituents also includes nonmetallic constituents.

3. Process according to Claim 1 or 2, **characterized in that**
- the drum (10) is cooled at the inner wall (12) by means of a cooled metal cylinder (14).

4. Process according to Claim 3, **characterized in that**
- the metal cylinder (14) has been filled with a cooling medium (15).

5. Device for carrying out the process according to one of the preceding claims, **characterized in that**
- the surface of the inner wall (12) of the drum (10) has a predetermined structure, so that the metal strip (5), after it has been sprayed onto this inner wall, is formed with a corresponding surface structure,
- the predetermined structure of the surface of the inner wall (12) of the drum (10) having a staircase structure, with the result that a number of the metal strips (5) can be formed with in each case different diameters at the staircase steps (12a, 12b, 12c, 12d), in such a manner that they can be tightly joined to one another on account of their diameters differing in accordance with the staircase steps.

6. Device according to Claim 5, **characterized in that**
- projections (19) for separating the metal strips (5) from one another are present at the staircase steps (12a, 12b, 12c, 12d).

7. Push-type link belt (1) for transmitting forces between two rotating components (2, 3), comprising a set of metal strips (5) which in each case bear against one another at their internal or external diameter, the metal strips having been produced using a process according to one of Claims 1 to 4 or using a device according to Claim 5 or 6.

8. Push-type link belt according to Claim 7, **characterized in that**
- at least some of the metal strips (5) have an uneven surface contour (20) at their internal or external diameter, in each case lying opposite a further metal strip (5) bearing against them at that location, in order to form lubrication pockets.

9. Push-type link belt according to Claim 7, **characterized in that**
- push links (6), which form the contour of the push-type link belt (1), which is v-shaped at least in partial regions, and by means of which the push-type link belt (1) engages in a corresponding v-shaped guide geometry (7) on the rotating components (2, 3), are arranged at predetermined intervals at the set of metal strips (5) which in each case bear against one another at their internal or external diameter.

## Revendications

1. Procédé de fabrication d'une bande métallique selon lequel :
- à partir d'un alliage métallique, on réalise une masse fondue (13),
- on fait passer la masse fondue (13) dans un tambour tournant (10), ouvert, de sorte que la masse fondue (13) est projetée radialement sur la paroi interne (12) du tambour (10),
- la masse fondue ( 13) après sa rencontre avec la paroi (12) est refroidie et transformée en une bande amorphe de métal (5), sans couture.

2. Procédé selon la revendication 1,
**caractérisé en ce que**
la masse fondue (13) présente, en plus de ses composants métalliques, également des composants non métalliques.

3. Procédé selon l'une quelconque des revendications 1 ou 2,
**caractérisé en ce que**
le tambour (10) est refroidi sur sa paroi interne (12) au moyen d'un cylindre métallique (14) refroidi.

4. Procédé selon la revendication 3,
**caractérisé en ce que**
le cylindre métallique ( 14) est rempli d'un agent réfrigérant (15).

5. Dispositif pour la mise en oeuvre du procédé selon l'une quelconque des revendications précédentes,
**caractérisé en ce que**
- la surface de la paroi interne (12) du tambour (10) présente une structure prédéfinie de sorte que la bande métallique (5) après son application sur cette surface présente une structure superficielle correspondante,
- la structure prédéfinie de la surface de la paroi interne (12) du tambour (10) est une structure en escalier de sorte que des bandes métalliques (5) peuvent être réalisées sur les marches d'escalier (12a, 12b, 12c, 12d) correspondantes, et de ce fait de leurs différences de diamètre correspondant à la hauteur des marches, ces bandes peuvent être jointes étroitement les unes aux autres.

6. Dispositif selon la revendication 5,
**caractérisé en ce que**
sur les marches d'escalier (12a, 12b, 12c, 12d) se trouvent des saillies (19) pour séparer les bandes métalliques (5) les unes des autres.

7. Bande à organes d'entraînement (1) pour transmettre des forces entre deux éléments tournants (2, 3), composée d'un paquet de bandes métalliques (5) en contact les unes avec les autres par leurs faces internes et externes, ces bandes (5) étant fabriquées par le procédé selon l'une quelconque des revendications 1 à 4, ou au moyen d'un dispositif selon l'une quelconque des revendications 5 ou 6.

8. Bande à organes d'entraînement selon la revendication 7,
**caractérisée en ce qu'**
au moins une des bandes métalliques (5) sur sa face interne ou externe en regard de l'autre bande métallique en contact avec elle, présente une surface non plane à contour irrégulier (20) de manière à former des poches de graissage.

9. Bande à organes d'entraînement selon la revendication 7,
**caractérisée en ce que**
sur le paquet constitué de bandes métalliques (5) en contact par leurs faces internes et externes, sont montés à des intervalles prédéfinis, des organes d'entraînement (6) qui donnent à la bande (1), au moins dans des zones partielles, un contour en forme de V par lequel la bande est en prise avec une portée de guidage (7), présentant un v correspondant, sur les éléments tournants.
